# EUROPÄISCHE PATENTANMELDUNG

(11) **EP 0 659 627 A2**
(43) Veröffentlichungstag der Anmeldung: **28.06.1995**
(21) Anmeldenummer: 94118914.4
(22) Anmeldetag: 01.12.1994
(51) Int. Cl.: B62B 3/06, B66C 23/48

(54) **Gabelhubwagen zum Heben und Senken sowie Transportieren von Lasten**

(30) Priorität: 02.12.1993 DE 9318480 U
(71) Anmelder: Buck, Erwin, D-88267 Vogt (DE)
(72) Erfinder: Buck, Erwin, D-88267 Vogt (DE)
(74) Vertreter: Engelhardt, Guido, Dipl.-Ing.

(57) **Zusammenfassung**

Ein Gabelhubwagen (GH) zum Heben und Senken sowie Transportieren von Lasten, mit an einem Gestellrahmen (4) befestigten Gabelzinken (2), mit einem einen lenkbaren Radsatz (5) aufweisenden Fahrgestell und mit einer hydraulisch betätigbaren Hubeinrichtung (32), die von einem um eine horizontale Achse schwenkbar gelagerten Handstellglied (1) betreibbar ist, weist einen Kranaufsatz (KA), der einen längsverschieblich ausgebildeten Lastarm (10) und zwei drehbeweglich angelenkte Auflager (8, 14) auf, von denen das eine Auflager (8) am Gestellrahmen (4) und das andere Auflager (14) an den Gabelzinken (2) des Gabelhubwagens (GH) abgestützt ist.

Durch diese Ausgestaltung wird erreicht, daß mit Hilfe des Kranaufsatzes (KA) auch tiefe und schmale und nur von der Seite zugängliche Ladeflächen problemlos beladen werden können und daß eine Umrüstung des Gabelhubwagens (GH) in kurzer Zeit zu bewerkstelligen ist.

## Beschreibung

Die Erfindung betrifft einen Gabelhubwagen zum Heben und Senken sowie Transportieren von Lasten nach dem Oberbegriff des Anspruches 1.

Mit derartigen von Hand manövrierbaren Gabelhubwagen werden in der Regel schwere Lasten, Paletten und ähnliches über meistens kurze, innerhalb einer Fabrik, eines Betriebes oder ähnliches gelegene Wegstrecken transportiert.

Dem DE-GM 90 11 106.0 ist ein derartiger Gabelhubwagen zu entnehmen. Mit solchen Gabelhubwagen werden mittels der Gabelzinken, die über Hebelgelenke mit dem Rollen aufweisenden Wagengestell verbunden sind, die Lasten lediglich geringfügig über ihre Standfläche angehoben, um diese dann mittels des Gabelhubwagens bewegen zu können. Müssen Lasten oder Paletten jedoch stärker angehoben werden, um sie an einer bestimmten Stelle zu positionieren, deren Niveau wesentlich über dem Niveau der Gabelzinken der angehobenen Lage liegt, ist der bekannte Gabelhubwagen nicht einsetzbar. Dazu muß vielmehr ein Gabelstapler oder gar ein Kran benutzt werden.

Derartige Hebezeuge sind aber, wenn die zu positionierende Stelle eine tief liegende, schmale und nur von einer Seite her zugängliche Ladefläche ist, wie beispielsweise der Kofferraum eines Kombifahrzeuges, meist nicht verwendbar. In diesen Fällen ist der Einsatz von Gabelstaplern oder Kranen erhebliche eingeschränkt oder sogar unmöglich.

Andererseits besteht aber Bedarf an einem einfachen leicht zu bedienenden Hebegerät, welches mit der zu handhabenden Last verfahrbar ist.

Der Erfindung liegt daher die Aufgabe zugrunde, den bekannten Gabelhubwagen derart zu verbesseren, daß das Be- und Entladen von Lasten oder Paletten über größere Niveauunterschiede als bisher, insbesondere auch aus tiefen, schmalen und nur von einer Seite her zugänglichen Ladeflächen nunmehr leicht zu bewerkstelligen ist. Der dazu erforderliche Bauaufwand soll gering gehalten werden, auch soll in kurzer Zeit und ohne Schwierigkeiten auf einfache Weise eine Umrüstung eines Gabelhubwagens möglich und eine leichte Bedienbarkeit soll gewährleistet sein.

Ausgehend von einem Gabelhubwagen der eingangs genannten Art ist diese Aufgabe erfindungsgemäß gelöst durch einen Kranaufsatz mit einem längsverschieblichen Lastarm und zwei drehbeweglich angelenkten Auflagern, von denen das eine Auflager am Gestellrahmen und das andere Auflager auf den Gabelzinken des Gabelhubwagens abgestützt ist.

Nach einem weiteren Merkmal der Erfindung ist der Kranaufsatz als Anbaueinheit ausgebildet und mit dem Gabelhubwagen lösbar verbunden.

Nach einer bevorzugten Ausführungsform ist der Kranaufsatz als Rohrkonstruktion - insbesondere als Vierkantrohrkonstruktion - ausgeführt, so daß der Lastarm und das Auflager einfach und betriebssicher teleskopartig längsverschieblich sind.

Nach einer weiteren Ausführungsform sind im Kranaufsatz, im Lastarm und im Auflager Hubzylinder angeordnet, über die der Lastarm sowohl nach Winkelstellung und Länge als auch mit angehängten Lasten einstellbar ist. Weitere Merkmale der Erfindung ergeben sich aus den Unteransprüchen.

Die erfindungsgemäße Weiterbildung des bekannten Gabelhubwagens weist viele Vorteile auf. So ist trotz des Kranaufsatzes der Gabelhubwagen weiterhin als Ein-Mann-Bedienungs-Gerät einsetzbar. Durch die Kombination der zwei verschiedenen Gerätetypen in ein Gerät können nunmehr aber Lasten auch über größere Niveauunterschiede angehoben werden; die bekannte, einfache Handhabung des Gabelhubwagens wird dadurch nicht beeinträchtigt. Der Einsatzbereich des Gabelhubwagens wird mit dem Kranzusatz aber erheblich erweitert. Des weiteren bleibt die gute Manövrierfähigkeit des Gabelhubwagens erhalten und mit dem ausfahrbaren Kranarm können auch tiefe, schmale und nur von einer Seite her zugängliche Ladeflächen, wie die Ladefläche eines Kombifahrzeuges, be- und entladen werden. Hierzu dient die am Lastarm angebrachte Seiltrommel mit Seil, Umlenkrolle am Lastarmende und ein Lasthaken am Seilende.

Da der Kranaufsatz lösbar mit dem Gabelhubwagen verbunden ist, kann der Gabelhubwagen kurzfristig und ohne großen Arbeitsaufwand in seinen ursprünglichen Zustand zurückgeführt und dann in üblicher Weise benutzt werden. Die Ausbildung von Lastarm und Auflager als Vierkantrohrkonstruktion ermöglicht ferner eine einfache und betriebssichere Verschiebbarkeit von Lastarm und Auflager, so daß diese an veränderliche Arbeitsbedingungen leicht anpaßbar sind. Schließlich erlaubt die Ausführungsform mit hydraulischen Arbeitszylindern eine Lastarmeinstellung auch mit angehängten Lasten.

Die Erfindung ist nachfolgend an Hand zweier, in der Zeichnung dargestellter Ausführungsbeispiele beschrieben.

Es zeigen:
- Figur 1: einen Gabelhubwagen in Seitenansicht mit einem Kranaufsatz, bei dem die Lastarmeinstellung manuell erfolgt,
- Figur 2: den Gabelhubwagen nach Figur 1 mit einem Kranaufsatz, bei dem die Lastarmeinstellung hydraulisch vorgenommen wird, und
- Figur 3: einen Hydraulikschaltplan für die Ausführungsform nach Figur 2.

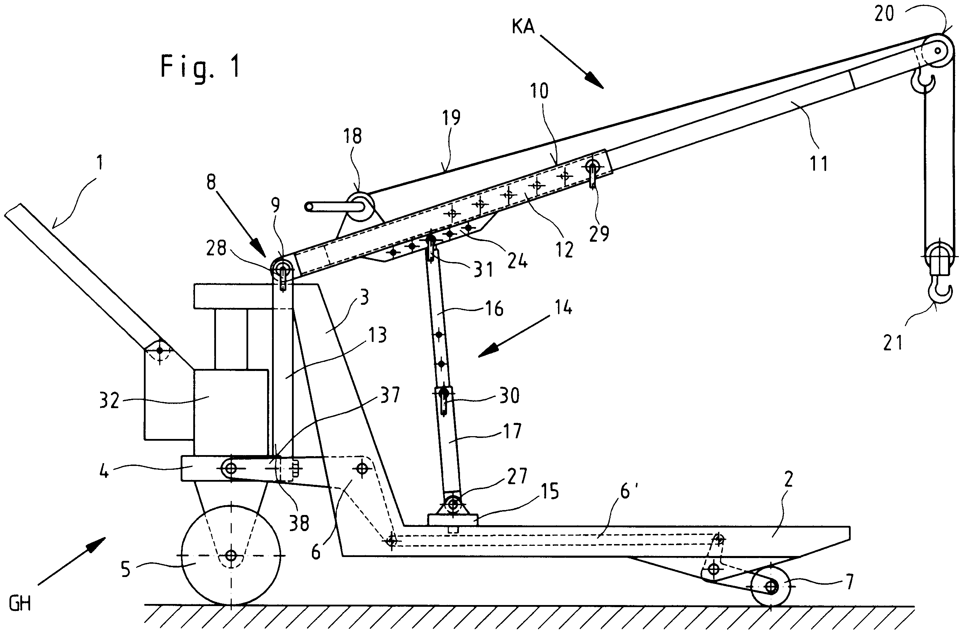

Der in Figur 1 dargestellte Gabelhubwagen GH weist eine Palettengabel mit zwei nach rechts sich erstreckende Gabelzinken 2 auf, die an ihrem einen Ende durch eine geneigt verlaufende Traghaube 3 fest miteinander verbunden sind, die wiederum an einem Gestellrahmen 4 befestigt ist. Mit dem Gestellrahmen 4 ist ein lenkbarer, als Doppelrad ausgebildeter vorderer Radsatz 5 verbunden. Dem Radsatz 5 sind hintere Laufrollen 7 zugeordnet, die zusammen das Fahrgestell des Gabelhubwagens GH bilden. Der Radsatz 5 und die Laufrollen 7 werden über einen Hebel 6 direkt bzw. über ein zu den hinteren Laufrollen 7 führendes Gestänge 6' nach unten gedrückt, wenn durch Auf- und Abschwenken eines Handstellgliedes 1, das gleichzeitig auch als Lenkdeichsel dient, Öl in eine an sich bekannte Hubeinrichtung 32 gepumpt wird. Beim Betätigen der Hubvorrichtung 32 wird somit der Gabelhubwagen GH parallel zu seiner Standoberfläche angehoben bzw. abgesenkt.

Dem Gabelhubwagen GH ist ein Kranaufsatz KA zugeordnet, der einen Lastarm 10 und ein Auflager 14 umfaßt. Der Kranaufsatz KA ist lösbar an dem Gabelhubwagen GH, und zwar an einem Tragarm 13 angebracht. Dazu ist der Tragarm 13 als U-förmige Stütze ausgebildet und mit dem Gestellrahmen 4 verschraubt und weist in dessen Bereich eine Auflagefläche 38 auf, die auf einer an dem Gestellrahmen 4 angearbeiteten Auflagefläche 37 aufgestützt ist, so daß auftretende Vertikalkräfte über die Auflagefläche 37 in den Gestellrahmen 4 übertragen werden.

In den zwei Seitenteilen des Tragarms 13 ist an dessen oberen Ende ein Bolzen 28 geführt, der ein Drehgelenk bildet. Dadurch ist der Lastarm 10 am Tragarm 13 schwenkbar gelagert. Die Lastarmlagerung 9, der Tragarm 13 und der Bolzen 28 bilden ein Auflager 8.

Ein weiteres Auflager 14, durch das der Lastarm 10 ebenfalls abgestützt ist, weist eine Auflageplattform 15, zwei ineinander längsverschiebliche Rohre 16, 17 und eine an der Unterseite des Lastarmes 10 angebrachte Halterung 24 aus einem U-Profil auf. Über Bolzen 27 und 31 ist das Auflager 14 am Lastarm 10 und der Auflageplattform 15 angelenkt, die Rohre 16 und 17 sind dagegen durch einen Bolzen 30 fixiert. Die Auflageplattform 15 ist mit den Gabelzinken 2 fest verbunden und überträgt das An- oder Absenken der Gabelzinken 2 über die Rohre 16, 17 auf den Lastarm 10. Die ineinander längsverschieblichen Rohre 16, 17 weisen in ihren jeweiligen Seitenwandungen mehrere Bohrungen auf, durch die der lösbare Bolzen 30 derart aufgenommen ist, daß die wirksame Länge des Auflagers 14 und damit auch die Lastarmneigung einstellbar ist.

Die auf der Unterseite des Lastarmes 10 angebrachte Halterung 24 weist ebenfalls mehrere Bohrungen auf, derart, daß der Bolzen 31 das Auflager 14 mit unterschiedlich einstellbaren Positionen mit der Halterung 24 verbindet und dadurch die Lastarmneigung ebenfalls einstellbar ist. Der Kranaufsatz KA ist durch Lösen der Bolzen 27 und 28 oder durch Abnehmen der Auflageplatte 15, die mittels eines Bolzens in den Gabelzinken 2 gehalten ist, und Lösen des Bolzens 28 demontierbar. Die Montage erfolgt in umgekehrter Weise.

Der Lastarm 10 besteht aus zwei ineinander längsverschieblichen Rohren 11 und 12, die über einen lösbaren Bolzen 29 in ihrer Einstellage fixierbar sind, so daß der Lastarm 10 in unterschiedliche Längen einstellbar ist.

Auf dem Lastarm 10 befinden sich eine Seiltrommel 18, mittels der ein Seil 19 auf- bzw. abweickelbar ist. Durch eine Umlenkrolle 20 am Lastarmende ist das Seil 19, das mit einem Lasthaken 21 versehen ist, geführt. Durch entsprechende Vorrichtungen ist dieser Seilzug als einfacher oder mehrfacher Flaschenzug ausbildbar.

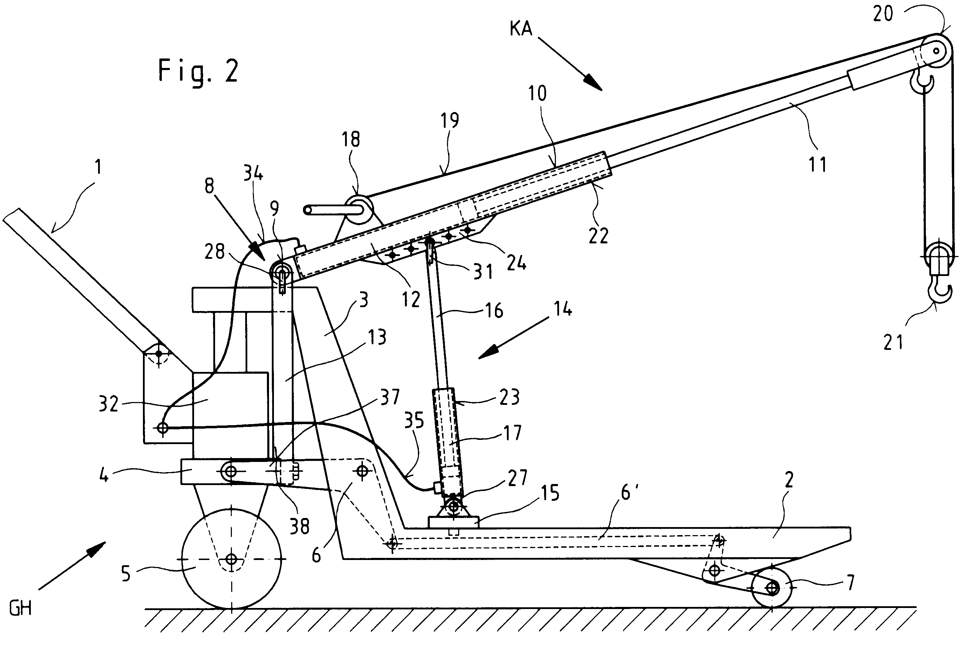

Bei der Ausführungsform nach Figur 2 ist ebenfalls ein Gabelhubwagen GH und ein Kranaufsatz KA vorhanden, der sich von dem Kranaufsatz KA gemäß Figur 1 dadurch unterscheidet, daß die den Lastarm 10 bildenden Rohre 11, 12 einen Arbeitszylinder 22 und die das Auflager 14 bildende Rohre 16, 17 ebenfalls einen Arbeitszylinder 23 aufnehmen.

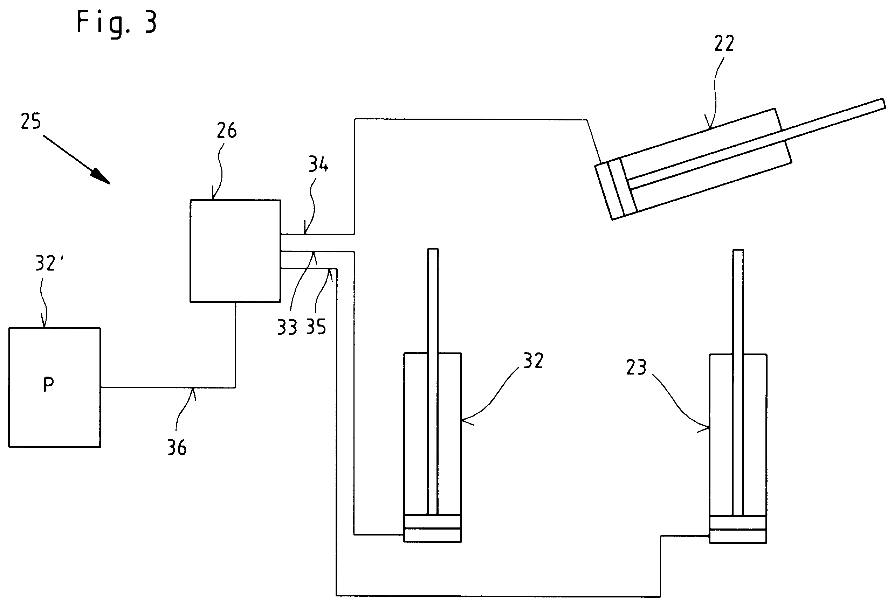

Die Hubeinrichtung 32 des Gabelhubwagens GH sowie die Arbeitszylinder 22 und 23 sind über Leitungen 33, 34 und 35 mit einem vorgeschalteten Mehrwegschalter 26 wahlweise verbindbar, dem, wie dem Schaltplan 25 nach Figur 3 zu entnehmen ist, das Druckmedium von einer Pumpe 32', die mittels des Handstellgliedes 1 betätigbar und bei der Ausgestaltung nach Figur 1 in der Hubeinrichtung 32 integriert ist, zugeführt wird.

Damit kann durch Umschalten des Mehrwegschalters 26 auch mit angehängter Last eine entsprechende Einstellung der Lastarmlänge und der Lastarmneigung durchgeführt werden. Ein Druckabfall in den beiden nicht angesteuerten Einheiten wird durch geeignete Mittel verhindert. Des weiteren ist durch nicht dargestellte Anschläge ausgeschlossen, daß ein vollständiges Herausdrücken der Rohre 12 und 17 von Lastarm 10 und Auflager 14 möglich ist.

## Patentansprüche

1. Gabelhubwagen zum Heben und Senken sowie Transportieren von Lasten, mit an einem Gestellrahmen befestigten Gabelzinken, mit einem einen lenkbaren Radsatz aufweisenden Fahrgestell und mit einer hydraulisch betätigbaren Hubeinrichtung, die von einem um eine horizontale Achse schwenkbar gelagerten Handstellglied betreibbar ist,
**gekennzeichnet durch**
einen Kranaufsatz (KA), der einen längsverschieblich ausgebildeten Lastarm (10) und zwei drehbeweglich angelenkte Auflager (8, 14) aufweist, von denen das eine Auflager (8) am Gestellrahmen (4) und das andere Auflager (14) an den Gabelzinken (2) des Gabelhubwagens (GH) abgestützt ist.

2. Gabelhubwagen nach Anspruch 1,
**dadurch gekennzeichnet,**
daß der Kranaufsatz (KA) als Anbaueinheit ausgebildet und mit dem Gabelhubwagen (GH) lösbar verbunden ist.

3. Gabelhubwagen nach Anspruch 1 oder 2,
**dadurch gekennzeichnet,**
daß der Kranaufsatz (KA) als Rohrkonstruktion ausgebildet ist, dessen Lastarm (10) aus zwei teleskopartig ineinander verschiebbaren und in unterschiedlichen Lagen arretierbaren Rohren (11, 12) besteht, dessen außen liegendes Rohr (12) an einem Ende mit dem einen Tragarm (13) bildendes, am Gestellrahmen (4) aufgestütztes Auflager (8) über einen steckbaren, ein Drehgelenk bildenden Bolzen (28) verbunden ist, und dessen weiteres Auflager (14) ebenfalls aus zwei teleskopartig ineinander verschiebbaren und in unterschiedlichen Lagen arretierbaren Rohren (16, 17) gebildet ist.

4. Gabelhubwagen nach einem oder mehreren der Ansprüche 1 bis 3,
**dadurch gekennzeichnet,**
daß die Rohre (11, 12) des Lastarmes (10) mehrere Bohrungen zur Aufnahme eines lösbaren Bolzens (29), durch den die beiden Rohre (11, 12) in ihrer jeweiligen Einstellage fixierbar sind, aufweisen, und daß die Rohre (16, 17) des Auflagers (14) ebenfalls mehrere Bohrungen zur Aufnahme eines lösbaren Bolzens (30), mittels dem die zwei Rohre (16, 17) in jeweils unterschiedlichen Einstellagen fixierbar sind, aufweisen, in denen der Lastarm (10) unterschiedliche Arbeitslagen einnimmt.

5. Gabelhubwagen nach einem oder mehreren der Ansprüche 1 bis 4,
**dadurch gekennzeichnet,**
daß der Lastarm (10) auf der dem Auflager (14) zugekehrten Seite mit einer mit in Seitenwände eingearbeiteten Bohrungen versehene Halterung aus einem U-Profil (24) verbunden ist, mit der das Auflager (14) mittels eines lösbaren Bolzens (31) derart verbindbar ist, daß der Lastarm (10) in mehreren unterschiedlichen Wingelstellungen feststellbar ist.

6. Gabelhubwagen nach einem oder mehreren der Ansprüche 1 bis 5,
**dadurch gekennzeichnet,**
daß der Lastarm (10) und die Auflager (8, 14) als Vierkantrohre ausgebildet sind.

7. Gabelhubwagen nach Anspruch 1,
**dadurch gekennzeichnet,**
daß dem Lastarm (10) ein mit dem längsverschieblichen Teil des Lastarmes (10) verbundener Arbeitszylinder (22) zugeordnet ist, der mit der hydraulischen Hubeinrichtung (32) verbunden ist, und daß dem Auflager (14) ein weiterer mit dem längsverschieblichen Teil des Auflagers (14) verbundener Arbeitszylinder (23) zugeordnet ist, der ebenfalls mit der hydraulischen Hubeinrichtung (32) in Verbindung steht.

8. Gabelhubwagen nach den Ansprüchen 1 und 7,
**gekennzeichnet durch**
eine Ventilschaltung (25) mit einem Mehrwegschalter (26), der mit seinem Eingang mit der hydraulischen, über das Handstellgied (1) betätigbaren Hubeinrichtung (32) und mit seinem ersten Ausgang (33) mit der Hubeinrichtung (32) des Gabelhubwagens (GH) sowie mit seinem zweiten und dritten Ausgang (34, 35) mit den jeweiligen Arbeitszylindern (22, 23) des Kranaufsatzes verbunden ist, derart, daß über den Mehrwegschalter (26) die jeweilige Winkelstellung und Auskragung des Lastarmes (10) einstellbar sind.

9. Gabelhubwagen nach einem oder mehreren der Ansprüche 1 bis 8,
**dadurch gekennzeichnet,**
daß dem Lastarm (10) eine seilführende Seiltrommel (18), eine Umlenkrolle (20) und ein Lasthaken (21) zugeordnet sind, die nach Art eines einfachen oder mehrfachen Flaschenzuges angeordnet sind.
